# EUROPÄISCHE PATENTSCHRIFT

(11) **EP 0 858 961 B1**
(45) Veröffentlichungstag und Bekanntmachung des Hinweises auf die Patenterteilung: **27.11.2002**
(21) Anmeldenummer: 98250048.0
(22) Anmeldetag: 10.02.1998
(51) Int. Cl.: B65G 15/42, B65G 15/46

(54) **Förderbahn für Keilripperiemen für Stückgut, insbesondere für Gepäck-Behälter**
Conveyer path with V-ribbed belt for articles, especially for luggage containers
Voie de transport avec courroie à nervures en V pour articles, notamment pour containers à bagages

(30) Priorität: 12.02.1997 DE 19707321
(43) Veröffentlichungstag der Anmeldung: 19.08.1998
(73) Patentinhaber: Siemens Aktiengesellschaft, 80333 München (DE)
(72) Erfinder: Droste, Heinrich, Dr.-Ing., 64832 Babenhausen (DE)

(56) Entgegenhaltungen:
- EP-A- 0 449 706
- DE-C- 4 407 163

## Beschreibung

Die Erfindung betrifft eine Förderbahn für Stückgut, insbesondere für Gepäck-Behälter gemäß dem Oberbegriff des Anspruchs 1.

Aus der deutschen Patentschrift DE 44 07 163 C1 ist eine Förderanlage für Paletten zum Abstellen von Kraftfahrzeugen bekannt, die im wesentlichen aus zwei parallel und mit Abstand zueinander verlaufenden Fördergurten zum Transport der Paletten besteht. Die Fördergurte sind jeweils endlos umlaufend ausgebildet und werden am Anfang und am Ende der Förderbahn über um horizontale Achsen drehbare Umlenkräder geführt, die antriebsmäßig mit einem Elektromotor verbunden sind. Die Übertragung der Antriebskraft zwischen den Umlenkrädern und dem einen flachen Querschnitt aufweisenden Fördergurt erfolgt reibschlüssig. Die Umlenkräder sind jeweils an den Enden von zwei parallel und in Förderrichtung verlaufenden Längsträgern gelagert.

In Förderrichtung gesehen zwischen den Umlenkrollen wird das obere Trum des Fördergurtes zusätzlich über Tragrollen abgestützt, die ebenfalls an den Längsträgem gelagert sind. Zur Seitenführung des Fördergurtes sind um senkrechte Achsen drehbare Führungsrollen bzw. seitlich neben dem Fördergurt sowie in Förderrichtung verlaufende Führungsschienen vorgesehen. Als weitere Möglichkeiten für die Führung des Fördergutes werden vorgeschlagen, entweder an den Tragrollen beidseitig Führungsscheiben anzuordnen, die Tragrollen ballig auszuführen oder die Tragrollen mit einer Umfangsnut zu versehen, über die ein komplementär ausgebildeten Steg geführt wird, der an der Unterseite des Fördergurtes angeordnet ist.
Derartige Fördergurte müssen, um u.a. etwaigem Schlupf zwischen den angetriebenen Umlenkrädem und dem Gurt entgegenzuwirken, stark vorgespannt werden. Die Vorspannung erfolgt über Spannstationen, die entsprechend der erforderlichen Spannlänge verschiedene Baugrößen aufweisen müssen. Eine Vereinheitlichung der Spannstationen ist daher kaum möglich. Darüber hinaus ist durch die reibschlüssige Antriebsart und die Ausbildung des Gurtes mit einem flachen und rechteckigen Querschitt ein Gleichlauf der beiden parallelen Fördergurte nicht immer gewährleistet, so daß es zu einem Verdrehen der Paletten kommen kann, wodurch eine zuverlässige Übergabe an nachfolgende Förderer beeinträchtigt werden könnte.

Ein vom Grundkonzept mit der zuvor beschriebenen Förderanlage für Paletten vergleichbarer Förderer ist bereits aus der europäischen Patentanmeldung EP 0 449 706 A1 bekannt. Anstatt der zuvor beschriebenen endlos umlaufenden und als Flachgurt ausgebildeten Fördergurte kommen hier Keilriemenrippen als Fördergurte zum Einsatz. Entprechenderweise sind die Umlenkräder sowie die zwischen den Umlenkrädern angeordnezetn Tragrollen an ihrer Umfangsfläche mit komplementär zu den Keilrippen des Keilrippenriemens ausgebildeten Rillen versehen.

Der vorliegenden Erfindung liegt die Aufgabe zugrunde, eine Förderbahn für Stückgut, insbesondere für Gepäck-Behälter mit einem Gurt-Förderer, zu schaffen, bei dem das Abtragen des Stückgutes über eine große Fläche mit einer kippstabilen und gedämpften Führung des Fördergurtes erfolgt.

Diese Aufgabe wird bei einer Förderbahn für Stückgut, insbesondere für Gepäck-Behälter durch die im Anspruch aufgeführten Merkmale gelöst..

Die Lösung geht aus von der Verwendung eines Keilrippenriemens als Fördergurt für den unmittelbaren Transport des Stückguts anstatt eines Flachgurtes. Eine gute Übertragung der Antriebskräfte zwischen den Umlenkrädem und dem Fördergurt wird durch die Keilwirkung der Keilrippe in den komplementär ausgebildeten Umfangsrillen der Umlenkräder erreicht. Trotz Verbesserung des Reibschlusses bleibt vorteilhafterweise der dem Reibschluß innewohnende Überlastungschutz des Gurtes erhalten, indem bei Überlastung Schlupf auftritt.
Durch den erfindungsgemäßen Einsatz von Tragrollen mit einer zylindrischen Umfangsfläche wird erreicht, dass die Abtragung des Stückgutes über eine große Fläche erfolgt und sich somit auf die einzelnen Keilrippen verteilt. Hierdurch wird auch die Führung des Fördergurtes kippstabiler

Durch die Ausbildung des Gurtes als Keilrippenriemen kann auch bei einer Vielzahl von Einsatzfällen auf eine zusätzliche Führung des Gurtes auf den zylindrischen Tragrollen verzichtet werden, insbesondere bei kurzen Förderstrecken, da durch die in Förderrichtung verlaufenden Rippen eine Selbstzentrierung erfolgt.
Außerdem ist vorteilhaft, dass die Keilrippen bei der Abtragung des Stückgutes auf die Tragrollen dämpfend wirken.
Als besonders vorteilhaft für den Transport des Stückgutes, insbesondere der Gepäck-Behälter, hat sich die Ausbildung der Förderbahn mit zwei parallel und voneinander beabstandeten sowie in Förderrichtung verlaufenden Förderem, von denen ein Förderer einen Fördergurt und der andere Förderer hintereinander angeordnete und freilaufend ausgebildete Förderrollen aufweist, erwiesen, da hierdurch Gleichlaufschwankungen beim Fördergurt nicht zu einer Schrägstellung des Stückguts führen. Des weiteren wird eine Beruhigung des Laufs des Stückguts auf dem Förderer dadurch erreicht, daß die Förderrollen und die Tragrollen für den Fördergurt in Förderrichtung gesehen gegeneinander versetzt angeordnet sind.

Besonders geeignet ist die vorliegende Förderbahn für den Transport von Behältern zur Aufnahme von Gepäck, wobei zusätzlich an der Unterseite der Behälter ein Führungselement angeordnet ist, das in einer in Förderrichtung gesehen zwischen den Förderrollen und dem Fördergurt verlaufenden Schiene geführt ist.

Als besonders vorteilhaft erweist sich die Verstärkung des Fördergutes mit Kevlar- oder Stahldraht-Einlagen, da hierdurch dessen Längendehnung minimiert wird und somit die Spannstationen des Förderers konstrukiv einfacher ausgestaltet werden können, da der Bereich an möglichen Spannwegen in Abhängigkeit der Länge der Gurt minimiert wird. Hierdurch können konstruktiv gleich ausgebildete Spannstationen für einen größeren Abschnitt von Gurtlängen verwendet werden.

Die Erfindung wird nachfolgend anhand von den in den Zeichnungen dargestellten Ausführungsbeispielen näher beschrieben. Es zeigen:
- Fig. 1: eine Draufsicht auf eine Förderbahn für Gepäck-Behälter,
- Fig. 2: eine Seitenansicht von Figur 1,
- Fig. 3: eine Schnittansicht von Figur 1 gemäß der Schnittlinie I-I,
- Fig. 4: eine Ausschnittsvergrößerung von dem Bereich x der Figur 3,
- Fig. 5: eine Ausschnittsvergrößerung einer Schnittansicht von Figur 1 gemäß der Schnittlinie II - II von dem Bereich des Umlenkrades 9.

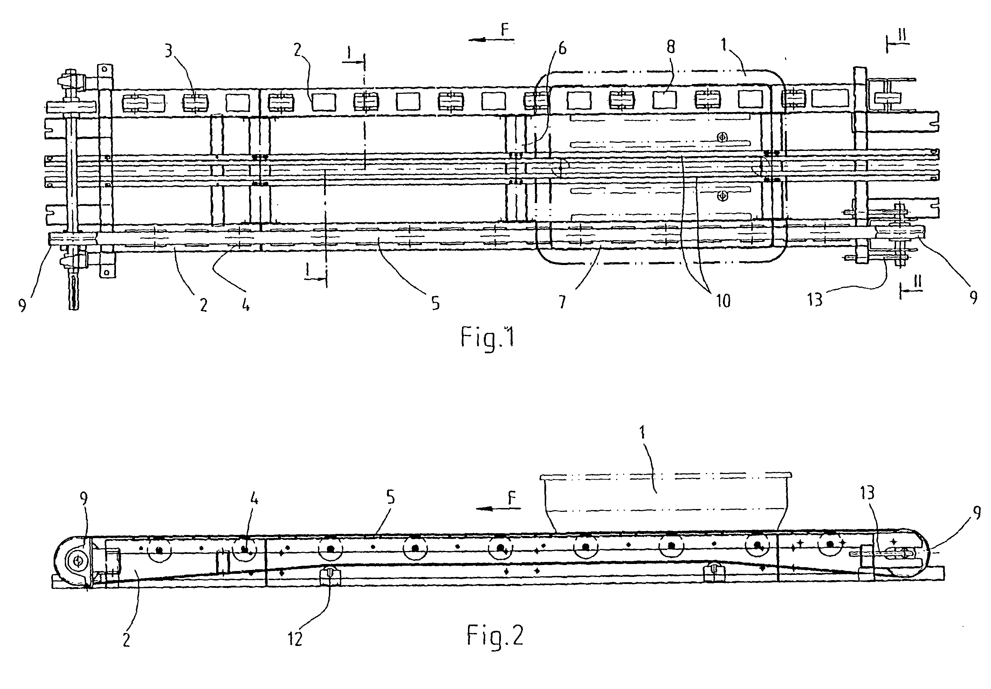

In Fig. 1 ist eine Draufsicht auf eine Förderbahn für Stückgut 1 in Form von Behältern für Gepäckstücke dargestellt, die im wesentlichen aus zwei parallel und mit Abstand zueinander verlaufenden Förderem mit Längsträgem 2 besteht, an denen in Förderrichtung F gesehen hintereinander und mit Abstand zueinander Förderrollen 3 oder Tragrollen 4 für einen Fördergurt 5 gelagert sind. Die Längsträger 2 sind C-förmig ausgebildet, jeweils aufrecht stehend mit ihren geschlossenen Seiten einander zugewandt und über mehrere Quertraversen 6 miteinander verbunden, sowie über nicht dargestellte höheneinstellbare Befestigungselemente mit dem Boden verbunden. in den Obergurten 7 der Längsträger 2 sind in Förderrichtung F aufeinander folgende und voneinander beabstandet angeordnete Öffnungen 8 vorgesehen, durch die von unten Förderrollen 3 bzw. Tragrollen 4 hindurchragen, die an den Stegen der Längsträger 2 um quer zur Förderrichtung F und horizontal verlaufende Achsen gelagert sind. Die Förderrollen 3 sind an dem in Förderrichtung F gesehen rechten Längsträger 2 angeordnet, die als handelsübliche Wälzlager mit einer Gummiummantelung des Außenringes ausgebildet sind. Hierdurch wird ein geräuscharmer Lauf des Stückgutes 1 über die Förderrollen 3 erzielt. Die Tragrollen 4 sind an dem in Förderrichtung F gesehen linken Längsträger 2 angeordnet und dienen zur Abstützung des Fördergurtes 5, der endlos umlaufend ausgebildet ist und am Anfang und am Ende des Längsträgers 2 über Umlenkräder 9, die um horizontale Achsen drehbar sind, umgelenkt wird.

Hierbei sind die Förderrollen 3 und die Tragrollen 4 jeweils nur in jeder zweiten Öffnung 8 angeordnet, wobei quer zur Förderrichtung F gesehen jeweils den Tragrollen 4 keine Förderrollen 3 gegenüberliegend angeordnet sind und umgekehrt.

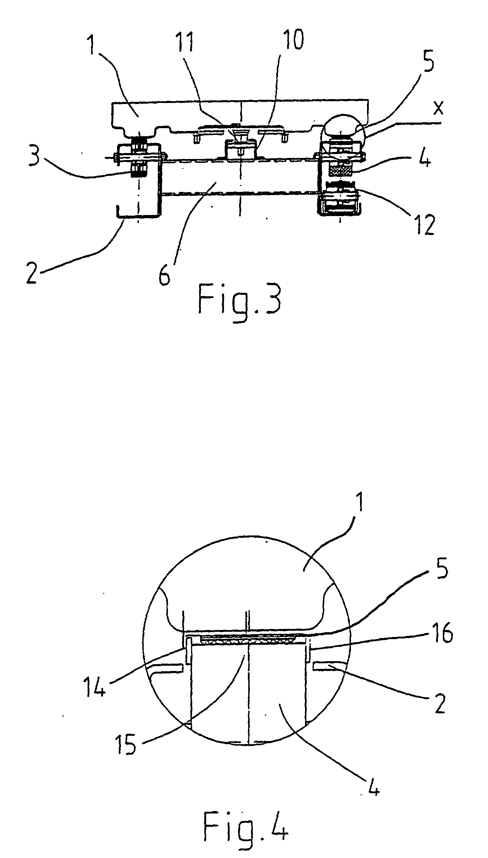

Des weiteren ist der Fig. 1 zu entnehmen, daß in der Mitte zwischen den beiden Längsträgem 2 eine Führungsschiene 10 vorgesehen ist, die auf den Quertraversen 6 befestigt ist und zur Führung der Behälter (Stückgut 1) über ein an der Unterseite der Behälters angeordnetes Führungselement 11 (s. Fig. 3) dient.

Die Fig. 2 zeigt eine Seitenansicht von der Fig. 1, und zwar auf die Seite des Längsträgers 2 mit den Tragrollen 4 für den Fördergurt 5. Es ist ersichtlich, daß die Tragrollen 4 jeweils nur in jeder zweiten Öffnung 8 angeordnet sind. Hierdurch können die linken und rechten Längsträger 2 fertigungstechnisch gleich ausgebildet werden. Das Untertrum des Fördergurtes 5 wird, um ein Durchhängen und ein Schleifen auf dem Boden zu vermeiden, über zwei in Förderrichtung F mit Abstand zueinander angeordnete Stützrollen 12 geführt. Die jeweils an den Enden der Längsträger 2 gelagerten Umlenkräder 9 sind nur an einem Ende über einen nicht dargestellten Antrieb antreibbar. Die nicht angetriebenen Umlenkräder 9 sind in Förderrichtung F verschiebbar gelagert, um über eine schematisch dargestellte Spannvorrichtung 13 den Fördergurt 5 vorspannen zu können.
Die Fig. 3 zeigt einen Querschnitt von Fig. 1 entlang der Schnittlinie I-I, der zu entnehmen ist, daß an dem Behälter (Stückgut 1), und zwar an dessen Unterseite ein stiftförmiges Führungselement 11 angeordnet ist, das in der Führungsschiene 10 quer zur Förderrichtung F geführt ist sowie durch diese Führungsschiene 10 von einem Abheben von der Förderbahn gehindert wird.
Der in Fig. 4 gezeigten Ausschnittsvergrößerung von Fig. 3 aus dem Bereich x der Tragrolle 4 ist zu entnehmen, daß der Fördergurt 5 als sog. Keilrippenriemen ausgebildet ist. Hierbei handelt es sich um einen handelsüblichen Keilriemen, der in Längsrichtung des Fördergurtes 5 verlaufende und auf der der Tragrolle 4 zugewandten Seite angeordnete Keilrippen aufweist. Die Keilrippen 14 treten in direkten Kontakt mit der zylindrischen Umfangsfläche der Tragrollen 4, so daß die Last des Stückgutes direkt über die Keilrippen 14 in die Tragrolle 4 eingeleitet werden. Diese Ausführungsform hat den Vorteil, daß die Abtragung der Lasten des Stückgutes 1 über eine größere Fläche erfolgt und sich somit auf die einzelnen Keilrippen 14 verteilt. Des weiteren hat diese Ausbildung den Vorteil, daß der Fördergurt 5 kippstabiler wird. Durch die Zentrierungswirkung der in Längsrichtung verlaufenden Keilrippen 14 kann insbesondere bei kürzeren Förderstrecken auf eine seitliche Führung mittels Spurkränzen 16 verzichtet werden. Außerdem dämpfen die Keilrippen 14 die Abtragung des Stückgutes 1 auf den Tragrollen 4.

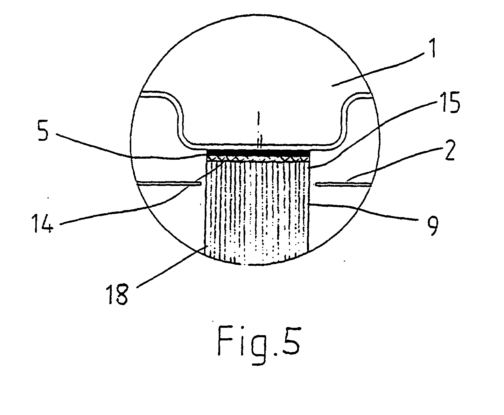

Des weiteren ist in der Fig. 5 eine Ausschnittsvergrößerung der Schnittansicht von Fig. 1 entlang der Schnittlinie II - II aus dem Bereich des Umlenkrades 9 für den Fördergurt 5 gezeigt. Es ist ersichtlich, daß das Umlenkrad 9 als Keilrippenscheibe ausgebildet ist, das dementspricht in Umfangsrichtung und komplementär zu den Keilrippen 14 ausgebildete Rillen 18 aufweist, um die Antriebskräfte von dem Umlenkrad 9 schlupfarm auf den Fördergurt 5 übertragen zu können. Diese Antriebskraftübertragung wird durch die Keilwirkung zwischen den Keilrippen 14 und den Rillen 18 verstärkt.
Es ist auch möglich, die nicht angetriebenen Umlenkräder 9 anstatt mit umlaufenden Rillen 18 mit profilloser Oberfläche auszubilden, um die Vorteile dieser Ausbildung bezüglich des ruhigeren Laufs des Fördergurtes 5 zu nutzen.

### Bezugszeichenliste

- 1: Stückgut
- 2: Längsträger
- 3: Förderrollen
- 4: Tragrollen
- 5: Fördergurt
- 6: Quertraverse
- 7: Obergurt
- 8: Öffnungen
- 9: Umlenkräder
- 10: Führungsschiene
- 11: Führungselement
- 12: Stützrolle
- 13: Spannvorrichtung
- 14: Keilrippen
- 15: Steg
- 16: Spurkränze
- 17: Nut
- 18: Rillen
- F: Förderrichtung
- x: Ausschnittsbereich

## Patentansprüche

1. Förderbahn für Stückgut (1), insbesondere für Gepäck-Behälter, mit mindestens zwei das Stückgut (1) tragende und voneinander beabstandet sowie parallel in Förderrichtung (F) verlaufenden Förderern, von denen mindestens einer einen angetriebenen, endlos umlaufenden und über Umlenkräder (9) geführten sowie als Flachgurt ausgebildeten Fördergurt (5) aufweist, der über in Förderrichtung (F) gesehen hintereinander und zwischen den Umlenkrädern (9) angeordnete Tragrollen (4) abgestützt ist, wobei der Fördergurt (5) als Keilrippenriemen ausgebildet ist, dessen Rippen auf der dem Stückgut (1) abgewandten Seite angeordnet sind, und wobei mindestens die angetriebenen Umlenkräder (9) als Keilrippenscheiben ausgebildet sind,
**dadurch gekennzeichnet,**
**dass** die Tragrollen (4) eine zylindrische Umfangsfläche aufweisen.

## Claims

1. Conveying path for piece goods (1), in particular for luggage containers, having at least two conveyers which bear the piece goods (1), are spaced apart from one another and run parallel in the conveying direction (F) and of which at least one has a driven, endlessly circulating conveying belt (5) which is guided over deflecting wheels (9), is designed as a flat belt and is supported via load-bearing rollers (4) which are arranged between the deflecting wheels (9) and one behind the other, as seen in the conveying direction (F), the conveying belt (5) being designed as a V-ribbed belt with the ribs arranged on the side which is directed away from the piece goods (1), and at least the driven deflecting wheels (9) being designed as V-ribbed pulleys, **characterized in that** the load-bearing rollers (4) have a cylindrical circumferential surface.

## Revendications

1. Chemin de transport pour marchandises (1), notamment pour conteneurs à bagages, comportant au moins deux convoyeurs portant les marchandises (1) et s'étendant à distance l'un de l'autre et parallèlement dans le sens de transport (F), convoyeurs dont au moins un présente une courroie de transport (5) entraînée, sans fin, guidée par l'intermédiaire de roues de renvoi (9) et réalisée sous forme de courroie plate, laquelle courroie de transport est supportée par des rouleaux porteurs (4) disposés entre les roues de renvoi (9) et les uns derrière les autres, vu dans le sens de transport (F), la courroie de transport (5) étant réalisée sous forme de courroie à nervures en V dont les nervures sont disposées sur le côté tourné à l'opposé des marchandises (1), et au moins les roues de renvoi (9) entraînées étant réalisées sous forme de disques à nervures en V,
**caractérisé en ce**
**que** les rouleaux porteurs (4) présentent une surface périphérique cylindrique.
